# EUROPÄISCHE PATENTSCHRIFT

(11) **EP 3 728 000 B1**
(45) Veröffentlichungstag und Bekanntmachung des Hinweises auf die Patenterteilung: **09.02.2022**
(21) Anmeldenummer: 18829289.0
(22) Anmeldetag: 17.12.2018
(51) Int. Cl.: B62D 15/02, B60R 25/24, G06F 3/03, G06Q 20/32, G06K 9/00, G06K 19/06

(54) **VERFAHREN ZUR MOBILEN EINPARKHILFE**
METHOD FOR MOBILE PARKING ASSISTANCE APPARATUS
PROCÉDÉ D'ASSISTANCE AU STATIONNEMENT MOBILE

(30) Priorität: 21.12.2017 DE 102017223607
(43) Veröffentlichungstag der Anmeldung: 28.10.2020
(73) Patentinhaber: Continental Automotive GmbH, 30165 Hannover (DE)
(72) Erfinder: BIEGER, Stefan, 63667 Nidda (DE)
(74) Vertreter: Continental Corporation
(86) Internationale Anmeldenummer: PCT/EP2018/085145
(87) Internationale Veröffentlichungsnummer: WO 2019/121478

(56) Entgegenhaltungen:
- DE-A1-102010 029 419
- DE-A1-102012 017 934

## Beschreibung

### 1. Stand der Technik

Die vorliegende Erfindung betrifft ein Verfahren zur mobilen Einparkhilfe uns somit zur Unterstützung des Einparkens eines Fahrzeugs in eine freie Abstellfläche oder Parklücke sowie eine entsprechende Vorrichtung und ein entsprechendes Computerprogrammprodukt.

Aus der Druckschrift DE 10 2006 026 092 A1 ist ein Verfahren zur Steuerung eines zumindest teilautomatisch durchführbaren Einparkvorgangs, durch welchen ein Kraftfahrzeug von einer Ist-Position in eine Soll-Position bringbar ist, bekannt. Hierbei werden Angaben zu möglichen Zielpositionen (z. B. freie Parkplätze) mittels drahtloser Kommunikation von einer Datenbank außerhalb des Kraftfahrzeugs bezogen. Es wird ferner beschrieben, dass, wenn sich das Kraftfahrzeug in einer strukturierten Umgebung eines Parkplatzzuweisungssystems befindet, die Ist-Position des Kraftfahrzeugs z. B. mittels geeigneter Sensoren eines Parkhauses bestimmbar ist. Dies ist eine vergleichsweise ungenaue Ermittlung der Ist-Position. Das angegebene Verfahren konzentriert sich ferner auf das Einparken des Fahrzeugs über eine Trajektorie bzw. auf die Bestimmung einer möglichen Zielposition.

In der Druckschrift DE 10 2008 027 692 A1 wird ein Verfahren zur Unterstützung eines Fahrers eines Fahrzeugs bei einem Parkvorgang beschrieben, bei dem das Fahrassistenzsystem verschiedene Sensoren zur Umfelderfassung des Fahrzeugs, beispielsweise Ultraschallsensoren, Radarsensoren, optisch basierte Sensoren, verwendet, welche eine Genauigkeit im Zentimeter-Bereich zur Erfassung von Entfernungen aufweisen. Das Fahrassistenzsystem oder das Fahrzeug ist ferner mit einem GPS-System ausgerüstet, um die Position des Fahrzeugs zu ermitteln. Als weitere Sensoren werden vorzugsweise Front- bzw. Rear-Viewing-Systeme eingesetzt. Das bekannte Verfahren sucht selbständig eine geeignete Abstellfläche für das Fahrzeug und parkt dort ein.

Außerdem ist aus der Druckschrift DE 10 2008 024 964 A1 ein Verfahren zum Betrieb eines Fahrassistenzsystems beim Einparken eines Fahrzeugs in eine seitliche Parklücke bekannt, bei dem mittels Fahrzeug-zu-Fahrzeug-Kommunikation einem nachfolgenden Fahrzeug ein Status der Aktivierung eines Einparkassistenten eines einparkenden Fahrzeugs übermittelt wird, so dass der Fahrer des nachfolgenden Fahrzeugs über mögliche Bremsmanöver des einparkenden Fahrzeugs informiert oder zumindest vorgewarnt wird. Dem nachfolgenden Fahrzeug können ferner Informationen über ein mögliches bevorstehendes Bremsmanöver über eine Fahrzeug-zu-Fahrzeug-Kommunikation übertragen werden. DE 10 2010 029419 A1 zeigt den Oberbegriff der unabhängigen Ansprüche.

Beim Einparken eines Fahrzeugs besteht das Bedürfnis, mit geringem zusätzlichen technischen Aufwand Informationen über freie Parkmöglichkeiten zu erhalten, um ein Einparken mit geringem Zeitaufwand und geringer Umweltbelastung zu ermöglichen. Die oben beschriebenen, bekannten Verfahren funktionieren einerseits mit vergleichsweise hohem technischen Aufwand oder betrachten nur einen Teilaspekt bei der Beschaffung von Informationen über freie Parkmöglichkeiten.

Die Aufgabe der vorliegenden Erfindung besteht demnach darin, ein einfaches Verfahren anzugeben oder eine technisch wenig aufwendige Vorrichtung zu schaffen, welches/welche das Parken auf einer freien Abstellfläche beschleunigt.

Die Aufgabe wird durch ein Verfahren gemäß den Merkmalen des Anspruchs 1 gelöst.

Insbesondere wird bei dem erfindungsgemäßen Verfahren die Position mindestens einer freien Abstellfläche basierend auf einer Fahrzeug-zu-Fahrzeug-Kommunikation (im Folgenden kurz C2C-Kommunikation) und/oder einer Fahrzeug-zu-Infrastruktur-Kommunikation (im Folgenden kurz C2I-Kommunikation ausgehend von der aktuellen Position des Fahrzeugs berechnet und einer Navigationsvorrichtung des Fahrzeugs übermittelt. Die C2C-Kommunikation und die C2I-Kommunikation werden häufig auch mit dem Begriff C2X-Kommunikation zusammengefasst.

Der Vorteil des erfindungsgemäßen Verfahrens besteht darin, dass für die Fahrzeug-zu-Fahrzeug-Kommunikation bzw. Fahrzeug-zu-Infrastruktur-Kommunikation bereits alle für das Auffinden von freien Abstellflächen notwendigen technischen Mittel im Fahrzeug vorhanden sind, die lediglich in geeigneter Weise eingesetzt werden müssen, um das Einparken von Fahrzeugen zu unterstützen. Insbesondere ist in den Fahrzeugen häufig ein Globales Positionierungssystem oder ein sonstiges Positionierungssystem vorhanden, welche ein sehr genaues Auffinden von Positionen und somit von freien Abstellflächen zum Parken ermöglichen. Globale Navigationssysteme sind gegenwärtig insbesondere Satellitennavigationssysteme wie GPS, Galileo, GLONASS (Russland), Compass (China), IRNSS (Indien), etc. Die sehr genaue Positionierung des Fahrzeugs wird bei der vorliegenden Erfindung genutzt, um auf einfache Weise freie Abstellflächen zu ermitteln.

Eine Navigationsvorrichtung ist vorzugsweise als Teil eines Positionierungssystems ebenfalls derzeit häufig in Fahrzeugen bereits vorhanden. Mittels der Navigationsvorrichtung kann dann, wenn die Positionen der freien Abstellflächen bekannt sind, eine Routenführung zu einer von dem Fahrer ausgewählten Abstellfläche berechnet werden. Hierfür können die freien Abstellflächen zunächst auf einer geeigneten Anzeigeeinrichtung der Navigationsvorrichtung angezeigt werden, so dass der Fahrer eine Abstellfläche auswählen kann, die ihm für sein Fahrzeug am geeignetsten erscheint.

Hierbei wird mit Abstellfläche eine für ein einzelnes Fahrzeug in Frage kommende Parklücke oder Platz zum Parken bezeichnet. Demgegenüber ist im Folgenden ein Parkplatz eine Einrichtung zum Parken eines Fahrzeugs mit einer Vielzahl von Abstellflächen, welche frei oder belegt sein können.

In einem bevorzugten Ausführungsbeispiel wird die Position der freien Abstellfläche der Navigationsvorrichtung dann übermittelt, wenn sich das Fahrzeug in einem vorab definierten Bereich im Bezug auf die freie Abstellfläche, vorzugsweise an der Schranke einer Parkeinrichtung, befindet. Hierbei wird ein Parkplatz oder ein Parkhaus mit dem Sammelbegriff Parkeinrichtung bezeichnet. Die Übermittlung von Informationen zu den freien Abstellflächen erfolgt vorzugsweise mittels Kurzstreckenfunk (z. B. Infrarot, Bluetooth, DSRC, ITS-G5, WLAN etc.). Die Informationen zu den freien Abstellflächen können beispielsweise als absolute Positionen oder relative Positionen übertragen werden. Ferner kann das Fahrzeug nach der Übermittlung der Positionsinformationen an die Navigationsvorrichtung in einen sogenannten Parkmodus versetzt. In diesem Modus wird beispielsweise eine besondere Darstellungsform durch die Anzeigeeinrichtung ausgewählt, welche die Auswahl einer geeigneten freien Abstellfläche erleichtert.

In einer Weiterbildung der Erfindung wird nach dem Abstellen des Fahrzeugs auf einer ausgewählten freien Abstellfläche die Position der ausgewählten Abstellfläche einem vorzugsweise von dem Fahrer transportierbaren Speichermedium, vorzugsweise einem Schlüssel des Fahrzeugs und/oder einem Mobiltelefon des Fahrers und/oder einer Chipkarte, übermittelt, danach auf dem Speichermedium gespeichert und vorzugsweise zusätzlich angezeigt. Der Vorteil dieser Ausgestaltung besteht darin, dass die Position des Fahrzeugs auf der ausgewählten Abstellfläche stets verfügbar ist und diese durch den Fahrer nicht mehr notiert werden muss.

Es ist ebenfalls bevorzugt, wenn die Navigationsvorrichtung oder das Speichermedium die Position der ausgewählten Abstellfläche einem Parkplatz-Managementsystem der Parkeinrichtung überträgt. Hierdurch liegen dem Parkplatz-Managementsystem der Parkeinrichtung stets aktuelle Daten zur Situation bezogen auf freie Abstellflächen vor.

Aus gleichem Grund von Vorteil ist, wenn dem Parkplatz-Management-System der Parkeinrichtung beim Verlassen der Parkeinrichtung die Position der ausgewählten und nun wieder freien Abstellfläche übertragen wird.

Die Position der mindestens einen freien Abstellfläche kann in einem weiteren Ausführungsbeispiel aus einer Abstandsmessung von mindestens einem Fahrzeug oder mindestens einem Infrastrukturelement zu anderen Fahrzeugen oder zu anderen Infrastrukturelementen berechnet werden, wobei die Fahrzeuge oder Infrastrukturelemente innerhalb eines Umkreises mit einem vorab festgelegten Radius um das eine freie Abstellfläche suchende Fahrzeug angeordnet sind. Der Vorteil dieses Ausführungsbeispiels besteht darin, dass das Verfahren besonders einfach zu realisieren ist und einfach und schnell in einem beliebigen Gebiet Abstellflächen für ein Fahrzeug ausfindig macht.

Um eine richtige Berechnung von freien Abstellflächen zu gewährleisten, ist es weiter vor Vorteil, wenn weitere Informationen zur Abstellflächensituation, vorzugsweise über Anwohnerparkzonen oder Halteverbote, von dem mindestens einen Infrastrukturelement übermittelt und/oder aus einer digitalen Karte der Navigationsvorrichtung bereitgestellt sowie zur Berechnung der Position der mindestens einen freien Abstellfläche herangezogen werden. Die digitale Karte ist in der Regel Bestandteil der Navigationsvorrichtung.

Die obige Aufgabe wird ferner durch eine Fahrassistenzvorrichtung zum Einparken eines Fahrzeugs in eine freie Abstellfläche gemäß Anspruch 8 gelöst.

Insbesondere weist die Fahrassistenzvorrichtung eine Rechenvorrichtung und eine Navigationsvorrichtung auf. Die Position mindestens einer freien Abstellfläche wird basierend auf einer Fahrzeug-zu-Fahrzeug- und/oder einer Fahrzeug-zu-Infrastruktur-Kommunikation ausgehend von der aktuellen Position des Fahrzeugs durch die Rechenvorrichtung berechnet und die berechnete Position der freien Abstellfläche anschließend einer Navigationsvorrichtung des Fahrzeugs übermittelt. Die Fahrassistenzvorrichtung ist zur Ausführung der oben beschriebenen Verfahrensschritte ausgebildet und weist die oben angegebenen Vorteile auf. Die C2C- und/oder C2I-Kommunikation wird vorzugsweise durch die Rechenvorrichtung des Fahrzeugs, welche entsprechende Sender und Empfänger aufweist, durchgeführt.

Die obige Aufgabe wird ebenfalls durch ein Computerprogrammprodukt für eine Fahrassistenzvorrichtung zum Einparken eines Fahrzeugs in eine freie Abstellfläche mit den Merkmalen des Anspruchs 15 gelöst.

Insbesondere ist das Computerprogrammprodukt zur Ausführung eines Computerprogramms nach dessen Implementierung vorgesehen, wobei das Computerprogrammprodukt nach der Implementierung die oben beschriebenen Verfahren mit den oben angegebenen Vorteilen durchführt.

Weitere Vorteile, Merkmale und Anwendungsmöglichkeiten der vorliegenden Erfindung ergeben sich auch aus der nachfolgenden Beschreibung von Ausführungsbeispielen und den Figuren.

### 2. Beschreibung und Vorteile der Erfindung

Das Fernsteuern von Assistenzsystemen mit einem "unsicheren" Gerät,beispielsweise einem Smartphone verbietet sich aus Sicherheitsgründen. Es lässt sich nicht gewährleisten, dass die Steuerbefehle latenzfrei beim Fahrzeug ankommen und nicht manipuliert wurden.

### 3. Zeichnungen

Ein Ausführungsbeispiel der Erfindung ist in den Zeichnungen dargestellt und wird im folgenden näher beschrieben.

Es zeigen schematisch:

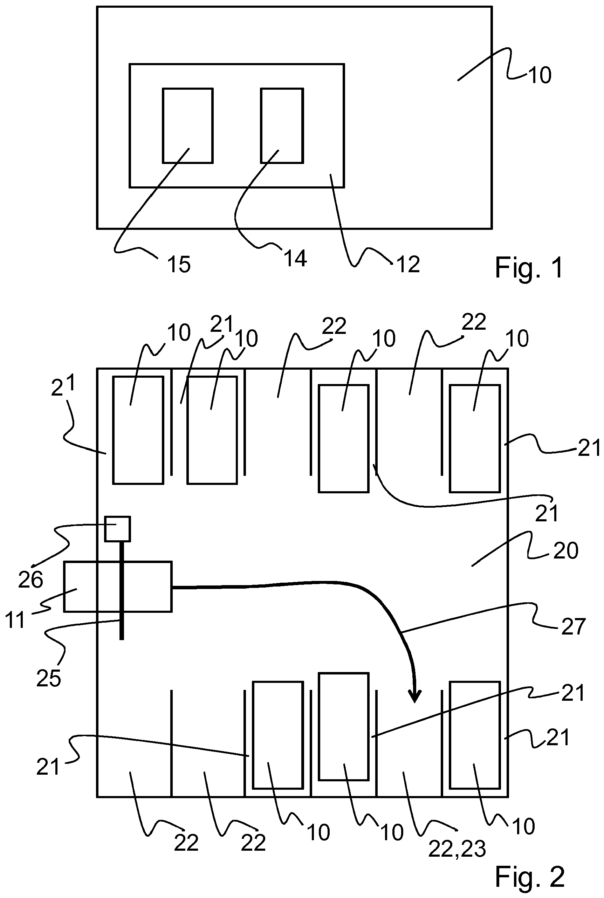

Fig. 1 ein Fahrzeug mit einer erfindungsgemäßen Fahrassistenzvorrichtung,
Fig 2 ein erstes Ausführungsbeispiel der Verwendung des erfindungsgemäßen Verfahrens in einer Parkeinrichtung,

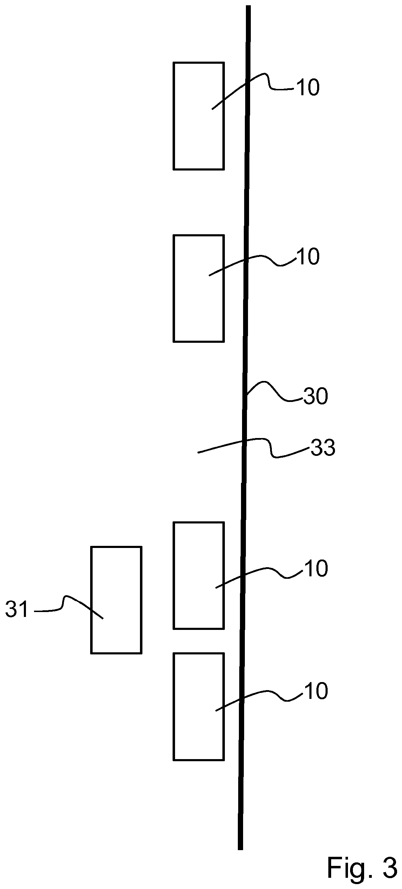

Fig 3 ein zweites Ausführungsbeispiel der Verwendung des erfindungsgemäßen Verfahrens, und

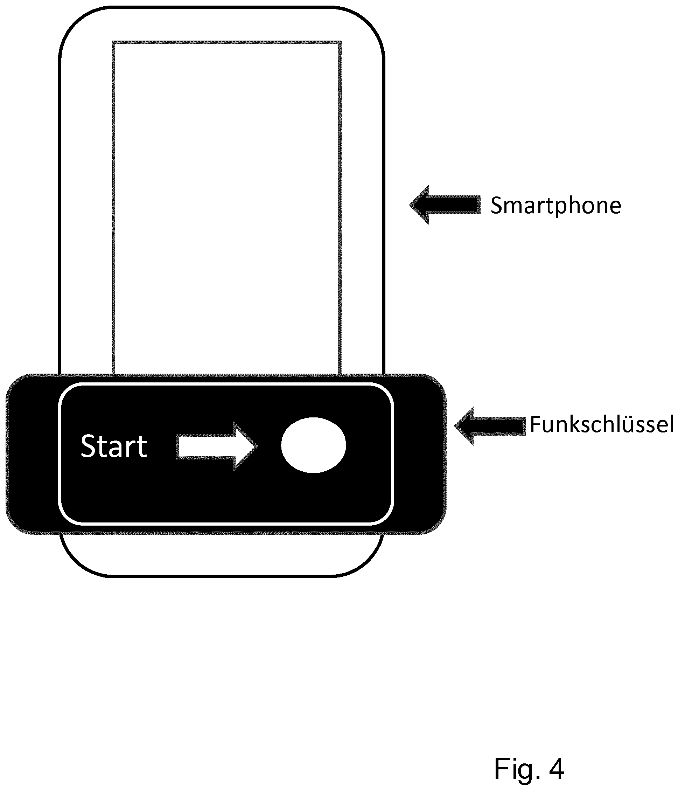

Fig. 4 ein Smartphone und ein Fahrzeugschlüssel.

### 4. Beschreibung von Ausführungsbeispielen

Ein in 1 dargestelltes Fahrzeug 10, beispielsweise ein Auto, welches auf einer Abstellfläche geparkt werden soll, ist mit einem Positionierungssystem, beispielsweise einem GPS-System 12, welches eine Rechenvorrichtung 14 und eine Navigationsvorrichtung 15 beinhaltet, ausgerüstet.

Wenn ein ankommendes Fahrzeug 11 in einer Parkeinrichtung, beispielsweise in einem in 2 dargestellten Parkhaus 20, eine Abstellfläche sucht, befindet sich das Fahrzeug zunächst an einer Eingangsschranke 25 zu dem Parkhaus 20. Das ankommende Fahrzeug 11 ist analog zu dem in 1 dargestellten Fahrzeug 10 ausgestattet.

Das Parkhaus 20 weist Abstellflächen 21 auf, welche mit Fahrzeugen 10 belegt sind. Die Abstellflächen 22 sind demgegenüber frei, so dass auf ihnen geparkt werden kann.

An der Eingangsschranke 25 des Parkhauses 20 werden mittels Kurzstreckenfunk (z. B. Infrarot, Bluetooth, DSRC, ITS-G5, W-LAN, etc.) von dem in der Eingangsschranke 25 integrierten Parkplatz-Management-System 26 zu der Rechenvorrichtung 14 des Fahrzeugs 11, d. h. mittels einer Fahrzeug-zu-Infrastruktur-Kommunikation, Informationen darüber übertragen, welche Abstellflächen 22 frei sind. Die Positionen der freien Abstellflächen 22 können beispielsweise als absolute Positionen des GPS-Systems 12 oder als relative Positionen, z. B. in Bezug auf die Position der Schranke 25, angegeben werden.

Der Fahrer möchte sein Fahrzeug 11 in eine enge Abstellflächen 22 einparken. Er aktiviert das Einpark-Assistenzsystem und steigt aus seinem Fahrzeug 11 aus. Während er dicht bei seinem Fahrzeug steht, startet er eine entsprechende App auf seinem Smartphone. Das Fahrzeug 11 streamt per WLAN ein Live-Bild der Fahrzeugumgebung an das Smartphone, beispielsweise eine Birds-View/Top-View-Ansicht seines Fahrzeugs 11. In den unteren Bildbereich des gestreamten Videos wird vom Fahrzeug ein eindeutiges Blinkmuster eingeblendet. Dieses Blinkmuster wird zufällig erzeugt und ist von außenstehenden nicht vorhersagbar. Die Frequenz des Blinkcodes ist an die Framerate des Videos angepasst. Ist die Bildwiederholfrequenz beispielsweise 25 Hertz, so werden keine Blinkmuster mit höherer Frequenz gesendet. Der Fahrer kann nun auf dem Smartphone die Umgebung des Fahrzeugs überwachen.

Um den Einparkvorgang zu starten, legt er seinen Funkschlüssel auf das Smartphone-Display, so dass die Linse im Fahrzeugschlüssel den Blinkcode erfassen kann. Der Funkschlüssel sendet die Blinkcodes per Funk zurück an das Fahrzeug 11.

Das Fahrzeug 11 vergleicht die empfangenen Signale mit den gesendeten, Es kann so die Laufzeit (Roundtrip-Time) und die Unverfälschtheit der Signale überwachen, Sind diese beiden Parameter ok, bekommt der Fahrer auf seinem Smartphone angezeigt, dass er jetzt den Einparkvorgang starten kann.

Er hält den Start-Knopf auf dem Funkschlüssel gedrückt. Das Fahrzeug beginnt mit dem Einparkvorgang.

Reißt nun beispielsweise die WLAN-Verbindung zwischen Fahrzeug und Smartphone ab, oder beendet sich die Smartphone-App beispielsweise weil der Akku leer ist, oder weil eine andere App in den Vordergrund tritt), so wird der Funkschlüssel keine gültigen Codes mehr an das Fahrzeug senden, Das Fahrzeug wird den Einparkvorgang unmittelbar abbrechen,

Das GPS-System 12 wird nach der Übertragung der Informationen über freie Abstellflächen 22 in den sogenannten Parkhaus-Modus versetzt. Anhand der von dem Parkhaus übermittelten Daten berechnet die Rechenvorrichtung 14 nun die Positionen der freien Abstellflächen 22 im Bezugssystem des fahrzeugeigenen GPS-Systems 12 und stellt diese dem Fahrer auf einer speziellen, für diesen Modus geschaffenen Anzeige dar. Der Fahrer kann nun eine für ihn geeignete Abstellfläche für sein Fahrzeug 11 auswählen.

Mittels der Navigationsvorrichtung 15, welche die berechneten Positionsdaten von der Rechenvorrichtung 14 erhält, kann anschließend eine Routenführung zu einer beispielsweise durch den Fahrer ausgewählten Abstellfläche 23 ermittelt und dem Fahrer zur Verfügung gestellt werden. Der Fahrer bewegt sich mit seinem Fahrzeug anschließend anhand der berechneten Routenführung 27 zur ausgewählten Abstellfläche 23 und parkt sein Fahrzeug 11 dort. Die Routenführung ist insbesondere in großen, unübersichtlichen und stark frequentierten Parkeinrichtungen, beispielsweise mehrstöckigen Parkhäusern, von Vorteil.

Wird nun das Fahrzeug 11 im Parkhaus auf der ausgewählten Abstellfläche 23 abgestellt, speichert die Navigationsvorrichtung 15 des Fahrzeugs 11 seine Position. Diese Funktion kann z. B. durch das Abstellen des Motors an der Position der ausgewählten Abstellfläche 23 getriggert werden. Die gemerkte Position der nun belegten Abstellfläche 23 überträgt die Navigationsvorrichtung 15 an ein nicht dargestelltes Speichermedium, beispielsweise an den Schlüssel des Fahrzeugs 11, an ein Mobiltelefon des Fahrers oder an ein anderes Gerät (z. B. Chipkarte) mit einer vorzugsweise drahtlosen Kommunikationsmöglichkeit. Die Position der Abstellfläche 23 kann auf Wunsch auf dem Speichermedium angezeigt werden. Hierdurch kann der Fahrer sein Fahrzeug 11 bei der Rückkehr zu diesem schneller wiederfinden.

Nun verlässt der Fahrer das Parkhaus 20. Am Ausgang erfasst das Parkplatz-Management-System 26 z. B. durch Abfrage des Speichermediums, auf welcher Abstellfläche das Fahrzeug 11 steht. Da das Speichermedium die Position des Fahrzeugs 11 bzw. der ausgewählten Abstellfläche 23 gespeichert hat, übergibt es diese an das Parkplatz-Management-System 26 des Parkhauses 20. Nun ist dem Parkplatz-Management-System 26 bekannt, dass die von dem Fahrer ausgewählte Abstellfläche 23, deren Position an das Parkplatz-Management-System 26 übermittelt wurde, belegt ist.

Nach einiger Zeit kommt der Fahrer zurück zum Parkhaus 20, um mit seinem Fahrzeug 11 weiterzufahren.

In einem bevorzugten Ausführungsbeispiel existiert in dem Parkhaus 20 eine Vielzahl von Auslesestellen, an welche die Position des Fahrzeugs 11 aus dem Speichermedium übertragen werden kann. Eine solche Auslesestelle befindet sich beispielsweise an der Schranke 25 und/oder an den Türen und/oder Kassenautomaten des Parkhauses. An einer solchen Auslesestelle wird auf Anforderung durch den Fahrer die Position des Fahrzeugs 11 und ggf. der Weg dorthin angezeigt, so dass der Fahrer sein Fahrzeug 11 schnell wiederfinden kann.

Die in der Navigationsvorrichtung 15 gespeicherte Position des Fahrzeugs 11 auf der Abstellfläche 23 wird bevorzugt auch als Startposition für die nächste Route verwendet, welche durch die Navigationsvorrichtung 15 berechnet wird.

Die Position der frei gewordenen Abstellfläche 23 wird durch das Speichermedium oder die Navigationsvorrichtung 15 dem Parkhaus-Management-System 26 beim Ausfahren des Fahrzeugs 11 per Kurzstreckenfunk übertragen. Dem Parkplatz-Management-System 26 ist nun bekannt, dass die entsprechende Abstellfläche 23, auf der das Fahrzeug 11 vorher geparkt hatte, nun wieder frei ist.

Anstelle der Kurzstreckenkommunikation mit dem Parkhaus-Management-System 26 kann auch eine Kommunikation zu einem entsprechenden Parkplatz-Management-Server über GPS, UMTS, LTE, WiMax, W-LAN usw. erfolgen.

Das vorgeschlagene Verfahren lässt sich mit vergleichsweise geringem technischem Aufwand und ohne zusätzliche Hardware im Fahrzeug realisieren.

In einem weiteren, anhand von 3 dargestellten Ausführungsbeispiel wird erläutert, wie die Parkplatzsuche im Innenstadtbereich von Großstädten verbessert werden kann. Bei der Parkplatzsuche wird der Suchende erheblich belastet. Häufig können Termine nicht gehalten werden und die Umwelt wird durch eine langwierige Parkplatzsuche verschmutzt. Das nachfolgend erläuterte Verfahren könnte hier Abhilfe schaffen.

Das mittels 3 dargestellte Verfahren dient zum Auffinden von Parklücken beispielsweise am Rand 30 einer Straße. Hier parken viele Fahrzeuge 10, welche dem in 1 dargestellten Fahrzeug 10 entsprechen. Einen gleichen Aufbau besitzt auch das eine Abstellfläche suchende Fahrzeug 31.

Zur Realisierung des erfindungsgemäßen Verfahrens ist es von Vorteil, wenn die Fahrzeuge 10, 31 Abstandssensoren aufweisen, welche vorn, hinten oder seitlich an den beteiligten Fahrzeugen 10, 31 montiert sind (beispielsweise Ultraschall-, Infrarot-, Radar-Sensoren, Kamera, etc.). Mittels der Recheneinheit 14 können die Fahrzeuge 10, 31 ferner eine Fahrzeug-zu-Fahrzeug-Kommunikation und/oder Fahrzeug-zu-Infrastruktur-Kommunikation durchführen. Ferner ist eine Navigationsvorrichtung 15 vorhanden.

Während der Suche nach einem Parkplatz nimmt der Fahrer des suchenden Fahrzeugs 31 zunächst über eine Taste oder ein Kommando eine Verbindung mit Fahrzeugen 10 in einem Umkreis mit einem vorab definierten Radius um das Fahrzeug 31 auf.

Hierdurch werden die bereits parkenden Fahrzeuge 10 in dem Umkreis aus einem sogenannten Sleep-Modus (inaktiver Zustand) "geweckt" und in den aktiven Zustand versetzt. Die sich nun im aktiven Zustand befindenden Fahrzeuge 10 vermessen dann ihre Abstände zum jeweils nächsten Fahrzeug 10 oder zur nächsten (nicht dargestellten) Infrastruktureinrichtung, beispielsweise einer Ampel oder einem Verkehrsschild, nach vorn, hinten und/oder zu den Seiten.

Mittels Fahrzeug-zu-Fahrzeug-Kommunikation werden die ermittelten Abstandsdaten von den Fahrzeugen 10 des Umkreises an die Rechenvorrichtung 14 des eine Abstellfläche suchenden Fahrzeugs 31 übermittelt. Ferner werden die Positionen der jeweiligen Fahrzeuge 10 an die Rechenvorrichtung 14 dieses Fahrzeugs 31 übertragen. Die Rechenvorrichtung 14 des GPS-Systems 12 kann nun aus den über C2C-Kommunikation übertragenen Informationen die jeweils zur Verfügung stehenden Fläche zum Parken feststellen. Ist diese ausreichend groß, so wird der entsprechende freie Raum als Abstellfläche ausgewiesen und dem Fahrer als zum Parken zur Verfügung stehende Abstellfläche angezeigt. Bei der in 3 dargestellten Situation stellt die Parklücke 33 eine derartige Abstellfläche dar.

Die Navigationsvorrichtung 15 kann aus den von der Rechenvorrichtung 14 ermittelten Daten die Route von der aktuellen Position des eine Abstellfläche suchenden Fahrzeugs 31 zur freien Abstellfläche 33 berechnen und dem Fahrer zum schnellen Auffinden der Parklücke zur Verfügung stellen. Existieren mehrere freie Abstellflächen im Umkreis des Fahrzeugs 31, können diese auf einer Anzeige der Rechenvorrichtung 14 dargestellt werden, so dass sich der Fahrer eine für ihn passende Abstellfläche auswählen kann.

Zur Bestimmung von Parklücken können auch noch weitere Informationen einbezogen werden, welche der Rechenvorrichtung 15 des Fahrzeugs 31 vorzugsweise über Fahrzeug-zu-Infrastruktur-Kommunikation übermittelt werden, beispielsweise über Anwohnerparkzonen oder Halteverbote.

## Patentansprüche

1. Verfahren zur Unterstützung des Einparkens eines Fahrzeugs (11, 31) in eine freie Abstellfläche (22 , 33), wobei die Position mindestens einer freien Abstellfläche (22, 33) basierend auf einer Fahrzeug-zu-Fahrzeug- und/oder einer Fahrzeug-zu-Infrastruktur-Kommunikation ausgehend von der aktuellen Position des Fahrzeugs berechnet und einer Navigationsvorrichtung (15) des Fahrzeugs (11, 31) übermittelt wird, **dadurch gekennzeichnet, dass** ein Einparkvorgang gestartet wird, indem eine Funkschlüssel des Fahrzeuges (11, 31) auf ein Smartphone-Display gelegt wird, so dass eine Linse im Fahrzeugschlüssel einen Blinkcode erfasst und der Funkschlüssel die Blinkcodes per Funk zurück an das Fahrzeug (11) zurücksendet.

2. Verfahren nach Anspruch 1, **dadurch gekennzeichnet, dass** die Position der freien Abstellfläche (22, 33) der Navigationsvorrichtung (15) dann übermittelt wird, wenn sich das Fahrzeug (11, 31) in einem vorab definierten Bereich in Bezug auf die freie Abstellfläche (22, 33), vorzugsweise in der Nähe einer Schranke (25) einer Parkeinrichtung (20), befindet.

3. Verfahren nach einem der vorhergehenden Ansprüche, **dadurch gekennzeichnet, dass** nach dem Abstellen des Fahrzeugs (11) auf einer ausgewählten freien Abstellfläche (23) die Position der ausgewählten Abstellfläche (23) einem vorzugsweise durch den Fahrer transportierbaren Speichermedium, vorzugsweise einem Schlüssel des Fahrzeugs (11) und/oder einem Mobiltelefon des Fahrers und/oder einer Chipkarte, übermittelt, danach auf dem Speichermedium gespeichert und vorzugsweise zusätzlich angezeigt wird.

4. Verfahren nach einem der vorhergehenden Ansprüche, **dadurch gekennzeichnet, dass** die Navigationsvorrichtung (15) oder das Speichermedium die Position der ausgewählten Abstellfläche (23) einem Parkplatz-Management-System (26) der Parkeinrichtung (20) überträgt.

5. Verfahren nach einem der vorhergehenden Ansprüche, **dadurch gekennzeichnet, dass** dem Parkplatz-Management-System (26) der Parkeinrichtung (20) beim Verlassen der ausgewählten Abstellfläche (23) die Position der nun wieder freien Abstellfläche (23) übertragen wird.

6. Verfahren nach einem der vorhergehenden Ansprüche, **dadurch gekennzeichnet, dass** die Position der mindestens einen freien Abstellfläche (33) aus einer Abstandsmessung von mindestens einem Fahrzeug (10) oder mindestens einem Infrastrukturelement zu anderen Fahrzeugen (10) oder zu anderen Infrastrukturelementen berechnet wird, welche innerhalb eines Umkreises mit einem vorab festgelegten Radius um das eine freie Abstellfläche suchende Fahrzeug (31) angeordnet sind.

7. Verfahren nach einem der vorhergehenden Ansprüche, **dadurch gekennzeichnet, dass** von dem mindestens einen Infrastrukturelement weitere Informationen zur Abstellflächensituation, vorzugsweise über Anwohnerparkzonen oder Halteverbote, übermittelt und/oder aus einer digitalen Karte der Navigationsvorrichtung (15) bereitgestellt sowie zur Berechnung der Position der mindestens einen freien Abstellfläche (33) herangezogen werden.

8. Fahrassistenzvorrichtung zum Einparken eines Fahrzeugs (11, 31) in eine freie Abstellfläche (22, 33) mit einer Rechenvorrichtung (14) und einer Navigationsvorrichtung (15), die Position mindestens einer freien Abstellfläche (22, 33) basierend auf einer Fahrzeug-zu-Fahrzeug- und/oder einer Fahrzeug-zu-Infrastruktur-Kommunikation ausgehend von der aktuellen Position des Fahrzeugs (11, 31) durch die Rechenvorrichtung (15) berechnet und die berechnete Position der freien Abstellfläche (22, 33) anschließend einer Navigationsvorrichtung (15) des Fahrzeugs (11) übermittelt wird,
**dadurch gekennzeichnet, dass**
ein Einparkvorgang gestartet wird, indem eine Funkschlüssel des Fahrzeuges (11, 31) auf ein Smartphone-Display gelegt wird, so dass eine Linse im Fahrzeugschlüssel einen Blinkcode erfasst und der Funkschlüssel die Blinkcodes per Funk zurück an das Fahrzeug 11 zurücksendet.

9. Fahrassistenzvorrichtung nach Anspruch 8, **dadurch gekennzeichnet, dass** die Position der freien Abstellfläche (22, 33) der Navigationsvorrichtung (15) durch die Rechenvorrichtung (14) dann übermittelt wird, wenn sich das Fahrzeug (11, 31) in einem vorab definierten Bereich in Bezug auf die freie Abstellfläche (22, 33), vorzugsweise in der Nähe einer Schranke (25) einer Parkeinrichtung (20), befindet.

10. Fahrassistenzvorrichtung nach einem der Ansprüche 8 oder 9, **dadurch gekennzeichnet, dass** nach dem Abstellen des Fahrzeugs (11, 31) auf einer ausgewählten freien Abstellfläche (23) die Position der ausgewählten Abstellfläche (23) durch die Navigationsvorrichtung (15) an ein vorzugsweise durch den Fahrer transportierbares Speichermedium, vorzugsweise auf einem Schlüssel des Fahrzeugs (11) und/oder einem Mobiltelefon des Fahrers und/oder einer Chipkarte, übermittelt, auf dem Speichermedium gespeichert und vorzugsweise zusätzlich angezeigt wird.

11. Fahrassistenzvorrichtung nach einem der Ansprüche 8 bis 10, **dadurch gekennzeichnet, dass** die Navigationsvorrichtung (15) oder das Speichermedium die Position der ausgewählten Abstellfläche (23) einem Parkplatz-Management-System (26) der Parkeinrichtung (20) überträgt.

12. Fahrassistenzvorrichtung nach einem der Ansprüche 8 bis 11, **dadurch gekennzeichnet, dass** die Navigationsvorrichtung (15) dem Parkplatz-Management-System (26) der Parkeinrichtung (20) beim Verlassen der ausgewählten Abstellfläche (23) die Position der nun wieder freien Abstellfläche (23) überträgt.

13. Fahrassistenzvorrichtung nach einem der Ansprüche 8 bis 12, **dadurch gekennzeichnet, dass** die Recheneinrichtung (14) die Position der mindestens einen freien Abstellfläche (33) aus einer Abstandsmessung von mindestens einem Fahrzeug (10) oder mindestens einem Infrastrukturelement zu anderen Fahrzeugen (10) oder zu anderen Infrastrukturelementen berechnet, welche innerhalb eines Umkreises mit einem vorab festgelegten Radius um das eine freie Abstellfläche suchende Fahrzeug (31) angeordnet sind.

14. Fahrassistenzvorrichtung nach einem der Ansprüche 8 bis 13, **dadurch gekennzeichnet, dass** das Infrastrukturelement der Recheneinrichtung (14) weitere Informationen zur Parkplatzsituation, vorzugsweise über Anwohnerparkzonen oder Halteverbote, übermittelt und die Recheneinrichtung (14) diese Informationen zur Berechnung der Position der mindestens einen freien Abstellfläche (33) heranzieht.

15. Computerprogrammprodukt für eine Fahrassistenzvorrichtung zum Einparken eines Fahrzeugs (11, 31) in eine freie Abstellfläche (22, 33) mit einer Rechenvorrichtung (14) und einer Navigationsvorrichtung (15) zur Ausführung eines Computerprogramms nach dessen Implementierung, **dadurch gekennzeichnet, dass** das Computerprogrammprodukt dazu vorgesehen ist, nach der Implementierung das Verfahren nach einem der Ansprüche 1 bis 7 durchzuführen.

## Claims

1. Method for assisting in the parking of a vehicle (11, 31) in a vacant parking area (22, 33), wherein the position of at least one vacant parking area (22, 33) is calculated on the basis of a vehicle-to-vehicle and/or a vehicle-to-infrastructure communication from the current position of the vehicle and is conveyed to a navigation apparatus (15) of the vehicle (11, 31), **characterized in that** a parking process is started by virtue of a radio key of the vehicle (11, 31) being placed onto a smartphone display, so that a lens in the vehicle key captures a flashing code and the radio key returns the flashing codes to the vehicle (11) by radio.

2. Method according to Claim 1, **characterized in that** the position of the vacant parking area (22, 33) is conveyed to the navigation apparatus (15) when the vehicle (11, 31) is in a previously defined region with reference to the vacant parking area (22, 33), preferably close to a barrier (25) of a parking facility (20).

3. Method according to either of the preceding claims, **characterized in that** after the vehicle (11) has been parked on a selected vacant parking area (23), the position of the selected parking area (23) is conveyed to a storage medium, which is preferably transportable by the driver, preferably a key of the vehicle (11) and/or a mobile phone of the driver and/or a chip card, is subsequently stored on the storage medium and is preferably additionally displayed.

4. Method according to one of the preceding claims, **characterized in that** the navigation apparatus (15) or the storage medium transmits the position of the selected parking area (23) to a car park management system (26) of the parking facility (20).

5. Method according to one of the preceding claims, **characterized in that** when the selected parking area (23) is left, the position of the parking area (23), which is now vacant again, is transmitted to the car park management system (26) of the parking facility (20) .

6. Method according to one of the preceding claims, **characterized in that** the position of the at least one vacant parking area (33) is calculated from a distance measurement from at least one vehicle (10) or at least one infrastructure element to other vehicles (10) or to other infrastructure elements that are arranged within a vicinity having a previously stipulated radius around the vehicle (31) looking for a vacant parking area.

7. Method according to one of the preceding claims, **characterized in that** further information pertaining to the parking area situation, preferably about resident parking zones or no-stopping zones, is conveyed by the at least one infrastructure element and/or provided from a digital map of the navigation apparatus (15) and used to calculate the position of the at least one vacant parking area (33).

8. Driving assistance apparatus for parking a vehicle (11, 31) in a vacant parking area (22, 33) using a computing apparatus (14) and a navigation apparatus (15), wherein the position of at least one vacant parking area (22, 33) is calculated by the computing apparatus (15) on the basis of a vehicle-to-vehicle and/or a vehicle-to-infrastructure communication from the current position of the vehicle (11, 31), and the calculated position of the vacant parking area (22, 33) is then conveyed to a navigation apparatus (15) of the vehicle (11),
**characterized in that**
a parking process is started by virtue of a radio key of the vehicle (11, 31) being placed onto a smartphone display, so that a lens in the vehicle key captures a flashing code and the radio key returns the flashing codes to the vehicle (11) by radio.

9. Driving assistance apparatus according to Claim 8, **characterized in that** the position of the vacant parking area (22, 33) is conveyed to the navigation apparatus (15) by the computing apparatus (14) when the vehicle (11, 31) is in a previously defined region with reference to the vacant parking area (22, 33), preferably close to a barrier (25) of a parking facility (20).

10. Driving assistance apparatus according to either of Claims 8 and 9, **characterized in that** after the vehicle (11, 31) has been parked on a selected vacant parking area (23), the position of the selected parking area (23) is conveyed by the navigation apparatus (15) to a storage medium, which is preferably transportable by the driver, preferably on a key of the vehicle (11) and/or a mobile phone of the driver and/or a chip card, is stored on the storage medium and is preferably additionally displayed.

11. Driving assistance apparatus according to one of Claims 8 to 10, **characterized in that** the navigation apparatus (15) or the storage medium transmits the position of the selected parking area (23) to a car park management system (26) of the parking facility (20) .

12. Driving assistance apparatus according to one of Claims 8 to 11, **characterized in that** when the selected parking area (23) is left, the navigation apparatus (15) transmits the position of the parking area (23), which is now vacant again, to the car park management system (26) of the parking facility (20) .

13. Driving assistance apparatus according to one of Claims 8 to 12, **characterized in that** the computing device (14) calculates the position of the at least one vacant parking area (33) from a distance measurement from at least one vehicle (10) or at least one infrastructure element to other vehicles (10) or to other infrastructure elements that are arranged within a vicinity having a previously stipulated radius around the vehicle (31) looking for a vacant parking area.

14. Driving assistance apparatus according to one of Claims 8 to 13, **characterized in that** the infrastructure element conveys further information pertaining to the car park situation, preferably about resident parking zones or no-stopping zones, to the computing device (14), and the computing device (14) uses this information to calculate the position of the at least one vacant parking area (33) .

15. Computer program product for a driving assistance apparatus for parking a vehicle (11, 31) in a vacant parking area (22, 33) using a computing apparatus (14) and a navigation apparatus (15) for executing a computer program after implementation thereof, **characterized in that** the computer program product is intended to perform the method according to one of Claims 1 to 7 after the implementation.

## Revendications

1. Procédé d'assistance au stationnement d'un véhicule (11, 31) à une place de stationnement libre (22, 33), la position d'au moins une place de stationnement libre (22, 33) étant calculée sur la base d'une communication véhicule à véhicule et/ou d'une communication véhicule à infrastructure à partir de la position actuelle du véhicule et étant transmise à un dispositif de navigation (15) du véhicule (11, 31), **caractérisé en ce que**
un processus de stationnement est démarré par placement d'une clé radioélectrique du véhicule (11, 31) sur un écran de Smartphone de sorte qu'une lentille située dans la clé du véhicule détecte un code clignotant et que la clé radioélectrique renvoie le code clignotant au véhicule (11) par voie radioélectrique.

2. Procédé selon la revendication 1, **caractérisé en ce que** la position de la place de stationnement libre (22, 33) n'est transmise au dispositif de navigation (15) que lorsque le véhicule (11, 31) se trouve dans une zone préalablement définie par rapport à la place de stationnement libre (22, 33), de préférence à proximité d'une barrière (25) d'un parc de stationnement (20).

3. Procédé selon l'une des revendications précédentes, **caractérisé en ce que**, après avoir stationné le véhicule (11) à une place de stationnement libre sélectionnée (23), la position de la place de stationnement sélectionnée (23) est transmise à un support de mémorisation, de préférence transportable par le conducteur, de préférence une clé du véhicule (11) et/ou un téléphone mobile du conducteur et/ou une carte à puce, puis est mémorisée sur le support de mémorisation et de préférence également affichée.

4. Procédé selon l'une des revendications précédentes, **caractérisé en ce que** le dispositif de navigation (15) ou le support de mémorisation transmet la position de la place de stationnement sélectionnée (23) à un système de gestion places de stationnement (26) du parc de stationnement (20).

5. Procédé selon l'une des revendications précédentes, **caractérisé en ce que** la position de la place de stationnement désormais libre (23) est transmise au système de gestion de places de stationnement (26) du parc de stationnement (20) au moment de quitter la place de stationnement sélectionnée (23).

6. Procédé selon l'une des revendications précédentes, **caractérisé en ce que** la position de l'au moins une place de stationnement libre (33) est calculée à partir d'une mesure de distance d'au moins un véhicule (10) ou d'au moins un élément d'infrastructure par rapport à d'autres véhicules (10) ou à d'autres éléments d'infrastructure, qui sont disposés dans un cercle de rayon prédéterminé autour du véhicule (31) à la recherche d'une place de stationnement libre.

7. Procédé selon l'une des revendications précédentes, **caractérisé en ce que** l'au moins un élément d'infrastructure transmet d'autres informations sur la situation des places de stationnement, de préférence sur des zones de stationnement de riverains ou de zones de stationnement interdit, et/ou les fournit à partir d'une carte numérique du dispositif de navigation (15) et les utilise pour calculer la position de l'au moins une place de stationnement libre (33) .

8. Dispositif d'assistance à la conduite destiné au stationnement d'un véhicule (11, 31) à une place de stationnement libre (22, 33) à l'aide d'un dispositif de calcul (14) et d'un dispositif de navigation (15), la position d'au moins une place de stationnement libre (22, 33) étant calculée par le dispositif de calcul (15) sur la base d'une communication véhicule à véhicule et/ou d'une communication véhicule à infrastructure à partir de la position actuelle du véhicule (11, 31) et la position calculée de la place de stationnement libre (22, 33) étant ensuite transmise à un dispositif de navigation (15) du véhicule (11), **caractérisé en ce que**
un processus de stationnement est démarré par placement d'une clé radioélectrique du véhicule (11, 31) sur un écran de Smartphone de sorte qu'une lentille située dans la clé du véhicule détecte un code clignotant et que la clé radioélectrique renvoie le code clignotant au véhicule 11 par voie radioélectrique.

9. Dispositif d'assistance à la conduite selon la revendication 8, **caractérisé en ce que** la position de la place de stationnement libre (22, 33) est transmise au dispositif de navigation (15) par le dispositif de calcul (14) lorsque le véhicule (11, 31) est dans une zone préalablement définie par rapport à la place de stationnement libre (22, 33), de préférence à proximité d'une barrière (25) d'un parc de stationnement (20).

10. Dispositif d'assistance à la conduite selon l'une des revendications 8 ou 9, **caractérisé en ce que**, après avoir stationné le véhicule (11, 31) à une place de stationnement libre sélectionnée (23), la position de la place de stationnement sélectionnée (23) est transmise par le dispositif de navigation (15) à un support de mémorisation, de préférence transportable par le conducteur, de préférence une clé du véhicule (11) et/ou un téléphone mobile du conducteur et/ou une carte à puce, puis est mémorisée sur le support de mémorisation et de préférence également affichée.

11. Dispositif d'assistance à la conduite selon l'une des revendications 8 à 10, **caractérisé en ce que** le dispositif de navigation (15) ou le support de mémorisation transmet la position de la place de stationnement sélectionnée (23) à un système de gestion de places de stationnement (26) du parce de stationnement (20).

12. Dispositif d'assistance à la conduite selon l'une des revendications 8 à 11, **caractérisé en ce que** le dispositif de navigation (15) transmet la position de la place de stationnement désormais libre (23) au système de gestion de places de stationnement (26) du parc de stationnement (20) au moment de quitter la place de stationnement sélectionnée (23).

13. Dispositif d'assistance à la conduite selon l'une des revendications 8 à 12, **caractérisé en ce que** le dispositif de calcul (14) calcule la position de l'au moins une place de stationnement libre (33) à partir d'une mesure de distance d'au moins un véhicule (10) ou d'au moins un élément d'infrastructure par rapport à d'autres véhicules (10) ou à d'autres éléments d'infrastructure qui sont disposés dans un cercle de rayon prédéterminé autour du véhicule (31) recherchant une place de stationnement libre.

14. Dispositif d'assistance à la conduite selon l'une des revendications 8 à 13, **caractérisé en ce que** l'élément d'infrastructure transmet d'autres informations sur la situation de places de stationnement, de préférence sur les zones de stationnement de riverains ou les zones de stationnement interdit, au dispositif de calcul (14), et le dispositif de calcul (14) utilise ces informations pour calculer la position de l'au moins une place de stationnement libre (33).

15. Progiciel destiné à un dispositif d'assistance à la conduite destiné au stationnement d'un véhicule (11, 31) à une place de stationnement libre (22, 33) à l'aide d'un dispositif de calcul (14) et d'un dispositif de navigation (15) pour exécuter un logiciel après son implémentation, **caractérisé en ce que** le progiciel est prévu pour mettre en œuvre le procédé selon l'une des revendications 1 à 7.
